# EUROPEAN PATENT APPLICATION

(11) **EP 4 623 662 A1**
(43) Date of publication of application: **01.10.2025**
(21) Application number: 25166678.0
(22) Date of filing: 27.03.2025
(51) Int. Cl.: A01C 5/02, A01C 5/04, A01B 69/02

(54) **POSITIONING DEVICE FOR AGRICULTURAL USE AND METHOD FOR POSITIONING SUCH A DEVICE IN A SPECIFIED AREA**

(30) Priority: 28.03.2024 SE 2450348
(71) Applicant: JCS Innovation, 371 94 Lyckeby (SE)
(72) Inventor: Carlsson, Jonas, 371 94 Lyckeby (SE)
(74) Representative: Bergenstråhle & Partners AB

(57) **Abstract**

The invention describes a positioning device (1) for agricultural use for releasing agricultural matter into/onto a surface (18) in a repetitive manner. The positioning device (1) comprises a wheel (2) with positioning element/s 4, 5), creating depressions/s, track/s or depression/s (9, 10) in the surface (18) when the wheel (2) passes over said surface (18). The wheel (2) also comprises container/s (11) and dispenser/s (3) for the exact release of solid and/or liquid material into the surface (18). By aligning the positioning element/s (4, 5) with the depressions (9, 10), the track/s or the depressions and track/s (9, 10) made in a previous run, the device (1) can be precisely positioned and run over the same surface (18) repetitively to release the same or a different solid and/or liquid in the exact same position in every run.

## Description

### Technical field:

The present invention relates generally to a positioning device for agricultural use for releasing agricultural matter into/onto a surface in a repetitive manner. The invention also relates to a method for repetitive accurate positioning of the positioning device in an area thus optimizing the process of cultivating agricultural products.

When culturing plants or crops a high yield and quality of the harvested product is wanted. To achieve this, crops and plants need to be carefully and meticulously tended to. A plant or crop need water and nutrients and protection from weeds and insects, to grow optimally. To provide optimal growth conditions it is therefore important to have a high precision in positioning when sowing, nurturing, watering and culturing said plants and crops. With a high precision in positioning better growth conditions can be created, optimizing quality and quantity of plants and crops but also save resources.

The Global Positioning System (GPS) is a satellite-based positioning system enabling the determination of a GPS-receivers exact position in longitude, latitude, and altitude. GPS-receivers are used in many different devices and products today and have many applications. GPS-receivers are used in agriculture to determine the position of farming equipment to optimize the culturing of plants and crops. However, GPS-based systems rely on that correct and timely data is sent to the receiver, from multiple satellites, to allow the determination of the position of the receiver. If too many satellites fail to send its data, or don't send it often enough, the GPS-receiver will not have enough data to provide a high positioning precision to the user. Thus, GPS-systems sometimes have a suboptimal accuracy which can result in a lower yield or even loss of cultured crops and plants, having financial but also resource related repercussions for the farmer and society.

Other positioning systems used in agriculture are based on mechanical techniques. For instance, CN211481938U describes a spraying device for marking positions at equal intervals. The device comprises a material spraying wheel, a hub, a bearing, an elastic control piece and a supporting connecting rod. This device is used for determining positions in forest deforestation. CN205232765 U describes a plant spacing marker. This device comprises a wheel with protrusions which allows for distance marks being made in the soil, by the protrusions, when the wheel is rotated over the soil. The device can be used as a plant spacing marker.

US7845294 B describes an apparatus for uniformly planting seeds into the earth. The apparatus comprises a frame, a wheel fixed to the frames, and a conveyor belt mounted to the frame. The conveyor belt is connected to the wheel such that it rotates along with the wheel. The conveyor belt top surface receives seeds from a seed box and then distributes the seeds to a down spout which guides the seeds into the soil. A furrow opener, also attached to the frame, plow in the soil, in the front of the apparatus, to create a seed row in which the seeds can fall into from the down spout.

SU919622T describes a device for sowing seeds. The device consists of an outer and an inner wheel separated by an inner compartment for holding seeds. The outer wheel contains hole formers which are activated to press into the soil thus creating a hole in the soil while also opening up a section of the outer wheel into the inner compartment, allowing seeds to fall into the hole, when a roller attached to the inner wheel come in contact with said hole former. By rolling said wheel over a soil, seeds are sown with a precise distance between the holes created by the hole formers.

Photorecognition is also a system used in agricultural devices today. The drawback with this technique is that this type of devices has difficulties separating cultured plants and/or grains from weeds during different light conditions. Also, it requires that the plant and/or grain has grown enough to be detected. Before the plant and/or grains have grown enough photorecognition can't be used for guiding in agricultural settings.

The drawback of current technology is that it does not allow for exact and repetitive positioning of an agricultural apparatus in an area over multiple runs/passages. Thus, today it is not possible to achieve precise and repetitive positioning in repetitive runs/passages such as to optimize the sowing, culturing, and nurturing of plants and crops. This leads to sub-optimal growth of plants and seeds and a lower yield of cultured products.

### Summary of invention

The invention solves this problem by providing a positioning device comprising a wheel with one or more positioning element/s, creating depressions/s, track/s or depression/s and a track/s longitudinally and laterally in the surface when the wheel passes over said surface. The wheel also comprises one or more container/s and dispenser/s allowing for the exact release of solid and/or liquid material into the surface. Said positioning element/s are exemplified by, but not limited to, a plurality of positioning protrusions, a disc/s, or positioning protrusions and a disc/s. By aligning these positioning element/s with the depressions, the track/s or the depressions and track/s made with the same wheel in a previous run, the device can be precisely positioned and run over the same surface repetitively to release the same or a different solid and/or liquid in the exact same position every time. This allows for a more precise addition of solids and/or liquids to the sown seed/s, or grown plant/s or crop/s, thus saving resources, and enabling an optimized growth of said seed/s, plant/s or crop/s.

According to one embodiment a positioning device 1 for agricultural use for releasing agricultural matter is provided, the device comprising a wheel 2 with at least one container 11 for holding a solid and/or liquid matter; at least one dispenser/s 3, connected to the at least one container 11, configured for releasing said matter out from the wheel 2 into/onto a surface; one or more positioning element/s 4,5, distributed circumferentially on the outer rim 20 of the wheel 2, for positioning of the device 1 by creating depressions/s and/or track/s 9,10 in said surface; a receiving portion 6 for interconnection of the positioning device 1 to an external driver wherein said positioning element/s 4,5 and dispenser/s 3 are laterally displaced in relation to each other.

According to one embodiment, the receiving portion 6 is configured for interconnecting a rod/beam/axle 7, enabling interconnection of the positioning device 1 to the external driver via the rod/beam/axle 7.

According to one embodiment said one or more positioning element/s 4,5 are evenly distributed circumferentially on the outer rim 20 of the wheel 2. With evenly distributed circumferentially herein is meant that the positioning elements 4,5 of the wheel 2 are separated with the same distance around the circumference of the outer rim of wheel 2.

According to one embodiment said at least one dispenser/s 3 is interchangeably replaceable with a foot/feet 14 for making holes 8 in said surface 18 before changing said feet 14 to dispenser/s 3.

According to one embodiment the wheel 2 comprises a plurality of containers 11, said containers are either configured for holding a solid or liquid matter.

According to one embodiment the wheel 2 comprises a plurality of containers 11, said containers are configured for holding different solid or liquid matters.

According to one embodiment the wheel 2 comprises a plurality of dispensers 3, wherein each dispenser 3 is connected to a respective container 11.

According to one embodiment said at least one dispenser 3 has a back wall 15 with two adjoining sides 16 and an opening 17 opposite the back wall 15, creating a bucket, said bucket being connected to the outer rim 20 of the wheel 2 in an orientation such that when the wheel 2 is rotated forward, on said surface 18, the back wall 15 and the two adjoining sides 16 of the bucket come into contact with the surface 18 first creating a hole 8 in said surface, before said continuous forward rotation subsequently exposes the bucket opening 17 to the surface 18 allowing said solid and/or liquid matter, now positioned in the bucket, to exit from the bucket opening 17 into the hole 8 in the surface 18, created by the same bucket.

According to one embodiment said solid and/or liquid matter is released from each respective container/s 11 and subsequently is transported into the one or more dispenser/s 3 enabling release of said matter out from the wheel 2 into/onto said surface 18.

According to one embodiment the container/s 11 are connected to the at least one dispenser 3 through one or more channels 12.

According to one embodiment said release is a controllable release of a unit of said solid and/or liquid matter into said one or more channels 12 enabled by a mechanically and/or electronically controlled valve 19 positioned between each container 11 and connected dispenser/s 3. In one embodiment the positioning device 1 comprises a wheel 2 with mechanically and/or electronically controlled valve/s 19 positioned between each container 11 and connected dispenser/s 3 enabling controlled release of said solid and/or liquid matter out from the wheel 2 into/onto said surface 18.

According to one embodiment the positioning element/s comprises 4,5 a plurality of positioning protrusions 4 distributed circumferentially on the outer rim 20 of the wheel 2.

According to one embodiment the positioning protrusions 4 are distributed around the circumference of the wheel 2 in one straight row on only one side of the wheel 2.

According to one embodiment the positioning protrusions 4 are distributed around the circumference of the wheel 2 in two parallel rows, on opposite sides of the wheel 2, each row comprising at least two positioning protrusions 4.

According to one embodiment the positioning protrusions 4 distributed around the circumference of the wheel 2 in two parallel rows are positioned in pairs, each positioning protrusion on the opposite side of the wheel 2, such that when said positioning protrusions 4 come in contact with said surface 18, two depressions 9 beside each other, separated with a distance d1, is created in said surface.

According to one embodiment the positioning protrusions 4 are distributed around the circumference of the wheel 2 in two overlapping parallel rows.

According to one embodiment the positioning element/s 4,5 comprises of one or more guidance disc/s 5 positioned on the wheel 2 for positioning of the device by creating track/s 10 in said surface 18.

According to one embodiment the positioning element/s 4,5 comprises a plurality of protrusions 4 distributed circumferentially on the outer rim 20 of the wheel 2 and one or more guidance disc/s 5, said protrusions 4 and disc/s 5 being positioned on the wheel 2 for positioning of the device 1 by creating depression/s 9 and a track/s 10 in said surface 18.

According to one embodiment said guidance disc/s 5 is positioned on the opposite side of the wheel 2 from the side with a straight row of positioning protrusions 4 when said wheel 2 comprises positioning protrusions 4 on one side of the wheel 2.

According to one embodiment the guidance disc 5 has a v-shape/disc-shape.

According to one embodiment said dispenser/s 3 protrudes out from the wheel 2, distributed evenly around the circumference of the wheel 2 in one row parallel to the row of positioning element/s 4,5, the disc/s 5, the row of positioning protrusions 4, parallel rows of positioning protrusions 4, or parallel to a row/s of positioning protrusions 4 and disc/s 5.

According to one embodiment said solid matter comprising solids of seeds, seedlings, grains, plants, flowers, pellets, fertilizers, insecticides, pesticides, or nutrients.

According to one embodiment said liquid matter comprising liquids of water, fertilizers, nutrients, insecticides, or pesticides.

According to one embodiment said driver is a human, an animal, or a separate engine and/or vehicle.

According to one embodiment a method for positioning the positioning device is provided, said method comprising;
rotating the wheel 2 over an area of said surface 18 in a first passage such that the positioning elements 4,5, said positioning protrusions 4, said disc/s 5, or said positioning protrusions 4 and disc/s 5 creates depressions 9 and/or track/s 10 in said surface 18, said dispenser/s 3 releasing said solid and/or liquid matter into hole/s 8 of said surface 18 when in contact with said surface; until said first passage is completed;
positioning said wheel 2, with said positioning elements 4,5, said positioning protrusions 4, said disc/s 5, or said positioning protrusions 4 and disc/s 5, such that they align laterally and/or longitudinally with the depressions 9 and/or track/s 10 created by said positioning elements 4,5, said positioning protrusions 4, said disc/s 5, or said positioning protrusions 4 and disc/s 5 in the same area of said surface 18 in said first passage;
rotating said wheel 2 over said surface 18 of the same area in a second passage, said positioning elements 4,5, said positioning protrusions 4, said disc/s 5, or said positioning protrusions 4 and disc/s 5 following laterally and/or longitudinally the pattern of the depressions 9 and/or track/s 10 in said surface 18 made in the first passage of said area, said dispenser/s 3 releasing the same or a different solid and/or liquid matter into holes 8 in said surface 18.

According to one embodiment the method for positioning the positioning device 1 comprises a passage executed before the first passage comprising; rotating the wheel 2, now comprising a foot/feet 14, over the area of said surface 18 such that said positioning elements 4,5, said positioning protrusions 4, said disc/s 5, or said positioning protrusions 4 and disc/s 5 creates depressions 9 and/or track/s 10 in said surface 18; said foot/feet 14 creating holes 8 in said surface 18; changing said interchangeably replaceable foot/feet 14 to said dispenser/s 3; continuing with the first passage of the method.

According to one embodiment the method optionally comprising rotating said wheel 2 over said surface 18 of the same area in one or more passages, said positioning elements 4,5, said positioning protrusions 4, said disc/s 5, or said positioning protrusions 4 and disc/s 5 aligning laterally and/or longitudinally with the pattern of the depressions 9 and/or track/s 10 made in the previous passages, said dispenser/s 3 releasing a solid and/or liquid matter into the holes 8 in said surface 18.

According to one embodiment the method comprises said wheel 2 of the positioning device 1 is rotated by the applied torque of an external driver, such as a human, animal, or a separate engine and/or vehicle.

According to one embodiment a method for cultivating a seed, seedling, root, cutting, crop, flower, or plant, by using the positioning device and/or the method of positioning the positioning device 1 of the invention is provided.

According to one embodiment a use of the positioning device 1 of the invention for distributing one or more of a solid and/or liquid matter into/onto said surface 18 is provided.

According to one embodiment said use is for planting, seeding, sowing, watering, weeding, fertilizing, nurturing and/or distributing insecticides and/or pesticides into/onto said surface.

### Brief description of drawings:

The invention will now be described in more detail by means of exemplary embodiments and with reference to the accompanying drawings, in which:

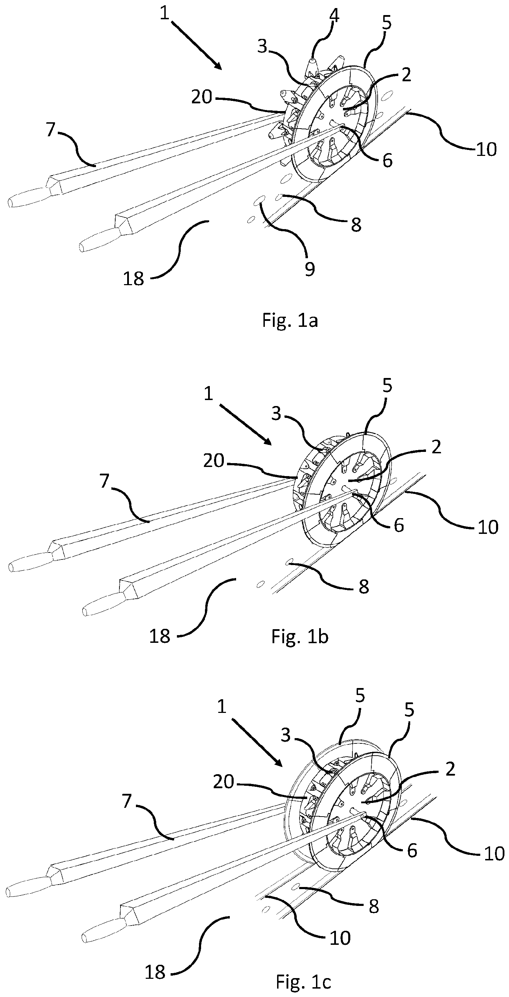

Fig. 1a depicts the positioning device 1 comprising a wheel 2 with dispensers 3, positioning protrusions 4, a guidance disc 5, receiving portion 6 and a rod/beam/axle 7. According to one embodiment, the rod/beam/axle is an axle 7 of the wheel 2, arranged along the axis of the wheel 2. Also shown are holes 8, depressions 9 and disc track 10 made in the surface 18. Fig. 1b depicts the positioning device 1 comprising a wheel 2 with dispensers 3, a guidance disc 5, receiving portion 6 and a rod/beam/axle 7. Also shown are holes 8, depressions 9 and disc track 10 made in the surface 18. Fig. 1c depicts the positioning device 1 comprising a wheel 2 with dispensers 3, positioning protrusions 4, two guidance discs 5, receiving portion 6 and a rod/beam/axle 7. Also shown are holes 8, depressions 9 and disc track 10 made in the surface 18.
Fig. 2a depicts a cross-section of half the wheel 2 with the outer rim 20, with dispensers 3, containers 11 and feeder channels 12 with valves 19 connecting the containers 11 with the dispensers 3. Fig. 2b depicts exemplary details of a dispenser 3, highlighting a back wall 15, two adjoining sides 16 and an opening 17 opposite the back wall 15.
Fig. 3 a-d depicts the wheel 2 with the outer rim 20, with dispensers 3, positioning protrusions 4 and the guidance disc 5.
Fig. 4a-c depicts the wheel 2 with the outer rim 20, with dispensers 3 and double rows of pairwise positioning protrusions 4.
Fig. 5 depicts the wheel 2 with the outer rim 20, with dispensers 3 and double rows of overlapping positioning protrusions 4.
Fig. 6 depicts the wheel 2 with the outer rim 20, with feet 14 and double rows of pairwise positioning protrusions 4.
Fig. 7 depicts the wheel 2 with the outer rim 20, with dispensers 3, positioning protrusions 4, containers 11, channels 12, solid matter 13, holes 8 and depressions 9 made in the surface 18.

### Detailed description

In the following, a detailed description of the invention will be given. Embodiments are presented in conjunction with the drawings (Figure 1- 7) to illustrate the disclosure. In the figures, like reference numerals designate identical or corresponding elements throughout the several figures. It will be appreciated that these figures are for illustration only and are not in any way restricting the scope of the invention.

Figure 1a presents one embodiment of the positioning device 1 for agricultural use for releasing agricultural matter according to one embodiment of the present disclosure. The positioning device 1 comprises a wheel 2, multiple dispensers 3 configured for releasing said matter out from the wheel into/onto a surface 18; positioning element/s exemplified by a plurality of positioning protrusions 4 distributed circumferentially on the outer rim 20 of the wheel for positioning of the wheel by creating depressions/s 9 into said surface 18; another positioning element exemplified by a guidance disc 5 attached to the wheel 2 for positioning and stabilizing the device laterally; a receiving portion 6 for interconnecting a rod/beam/axle 7, enabling interconnection of the positioning device 1 to an external driver via the rod/beam/axle 7. Figure 1 also presents holes 8, depressions 9 and a disc track 10 made in the surface 18 by the dispenser/s 3 or interchangeable feet 14, the positioning protrusions 4 and the disc 5 respectively. Figure 1b presents an alternative embodiment of the positioning device 1 comprising a wheel 2 with the outer rim 20; multiple dispensers 3 configured for releasing said matter out from the wheel into/onto a surface 18; positioning element exemplified by a guidance disc 5 attached to the wheel 2 for positioning and stabilizing the device laterally; a receiving portion 6 for interconnecting a rod/beam/axle 7, enabling interconnection of the positioning device 1 to an external driver via the rod/beam/axle 7. Figure 1b also presents holes 8 and a disc track 10 made in the surface 18 by the dispenser/s 3 or interchangeable feet 14, and the disc 5 respectively. Figure 1c presents another alternative embodiment of the positioning device 1 comprising a wheel 2 with the outer rim 20; multiple dispensers 3 configured for releasing said matter out from the wheel into/onto a surface 18; positioning elements exemplified by two guidance discs 5 attached to the wheel 2 for positioning and stabilizing the device laterally; a receiving portion 6 for interconnecting a rod/beam/axle 7, enabling interconnection of the positioning device 1 to an external driver via the rod/beam/axle 7. Figure 1c also presents holes 8 and disc tracks 10 made in the surface 18 by the dispenser/s 3 or interchangeable feet 14, and the discs 5 respectively. Figure 1a, b and c also shows how the positioning protrusions 4 and/or disc/s 5 are laterally displaced in relation to said dispenser/s 3. Note that the expression laterally, as used herein, refers to sideways or a sideway direction in relation to the direction of movement of the wheel 2 also being parallel to the axis of the wheel 2.

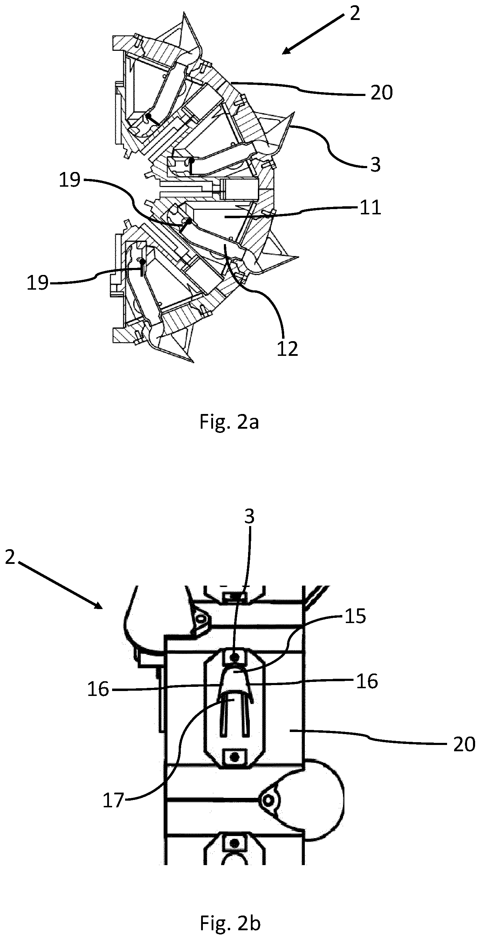

The positioning protrusions 4 and/or disc/s 5 are laterally displaced from said dispenser/s 3 with a distance. This lateral distance is determined by the measurements of the wheel 2 itself, such as the width of the wheel 2, and by the positioning of the protrusion/s 4 and dispenser/s 3 on the wheel 2. For instance, the distance between positioning protrusions 4 and/or disc/s 5 from said dispenser/s 3 will be greater with an increased width of the wheel 2. The width of the wheel can be adapted to the area of the surface the device 1 is used on. For a larger area a larger device 1 with a wider wheel 2 is more suitable enabling covering a larger area more efficiently. The width of the wheel 2 can be anywhere between 0.1 - 2 meters. Thus, said positioning element/s 4,5 and dispenser/s 3 can be laterally displaced from each other, on the wheel 2 by a distance of between 0.01 - 2 meters, 0.1 - 1 meters, or 0.1 - 0.5 meters. Also, the positioning protrusions 4 can be positioned on or at the edge/s of the wheel 2, as depicted in figure 2b, figure 3d and figure 5 for example. Alternatively, the positioning protrusions 4 can be positioned with a distance from said edge/s laterally closer to the center of the wheel 2 and said dispenser/s 3.

In one embodiment of the invention the wheel 2 comprises one dispenser 3. In another embodiment of the invention the wheel 2 comprises 2, 3, 4, 5, 6, 7, 8, 9,10, 11, 12, 13, 14, 15 or 16 dispensers 3 evenly distributed around the circumference of the wheel 2. The dispenser/s 3 of the invention are laterally displaced from the positioning element/s 4,5 on the wheel 2.

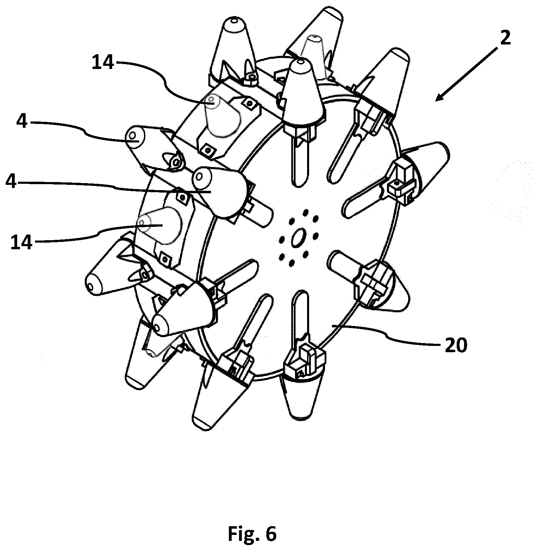

In another embodiment of the invention the dispenser/s 3 is interchangeably replaceable with a foot/feet 14, for making holes 8 in said surface (see figure 6).

The dispenser/s 3 are also used to make holes 8 in said surface 18 when the composition and compaction of said surface so permits. The hole/s 8 created in said surface 18 must be robust and deep enough to enable subsequent planting, sowing, culturing, watering and nurturing. Therefore, for some surfaces the device 1 is used with said foot/feet 14 for when it is important achieving robust and deep holes in the surface before planting, sowing, culturing, watering and nurturing. Thus, by first passaging over a surface 18 area with the positioning device 1 comprising the wheel 2 with said foot/feet 14 attached to the wheel 2, holes 8 for planting, sowing, culturing, watering and nurturing can be made in advance in the surface 18 using said foot/feet 14. By changing said foot/feet 14 for dispenser/s 3 and passaging the positioning device 1, now comprising the wheel 2 with dispenser/s 3, over the same surface area solid and/or liquid matter can be released into the pre-made holes 8. The feet 14 can for instance be especially useful when planting, sowing, culturing, watering and nurturing in surfaces 18, such as but not limited to soil, which are either to compact and thus harder to penetrate or to loosely packed making it hard to form robust and deep holes 8 in. Thus, holes 8 can be formed in said surface 18 by either using the dispenser/s 3 or by using the foot/feet 14 of the invention.

The rod/beam/axle 7 connected to receiving portion 6 of the wheel 2, allow connection of the positioning device 1 to an external driver via the rod/beam/axle 7. In one embodiment of the invention said driver is a human, an animal, or a separate engine and/or vehicle. The receiving portion 6 can be any of an anchor point, an axis, or the like on the wheel, enabling connection to the rod/beam/axle 7. The rod/beam/axle 7 can be interconnected to the receiving portion 6 of the wheel 2 in any suitable way. The rod/beam/axle 7 can for instance interconnect to the receiving portion 6 of the wheel 2 through an axle. Said axle can either be fixed to the wheel 2 or fixed to said rod/beam/axle 7. Said axle can be interconnected to said rod/beam/axle 7 in any suitable way. For instance, in the case said axle is fixed to the wheel 2 the rod/beam/axle 7 can connect to the axle of the wheel 2 through a ball bearing/ball bearings positioned in the rod/beam/axle 7 enabling interconnection with said axle. In the case said axle is fixed to the rod/beam/axle 7 said rod/beam/axle 7 can connect to a ball bearing/ball bearings positioned in the wheel 2 enabling interconnection with said axle. Thus, with said ball bearing/s the wheel 2 can rotate around the axle when said rod/beam/axle 7 is connected to an external driver, enabling the positioning device 1 to move relative to said surface 18.

In one embodiment of the invention said driver is a human, an animal, or a separate engine and/or vehicle. According to one embodiment the driver is arranged via an axle 7 along the axis of the wheel 2. Thus, the driver may comprise at least one driving wheel or mechanism arranged parallel to the wheel 2 and interconnected to the axle 7. According to one embodiment, the driver may comprise a second driving wheel arranged on the other side of the wheel 2 and connected to said axle 7. A driving engine may be arranged on a chassis above the wheels 2.

In another embodiment of the invention said driver is configured for causing rotation of the rod/beam/axle 7 which motion is transferred into rotation of the connected wheel 2. According to one embodiment, the driver is configured for causing linear motion of the rod/beam/axle, which motion is transferred into rotation of the connected wheel 2.

Figure 2a presents a cross-section of the wheel 2 from the side with the outer rim 20, comprising dispenser/s 3, each connected to a container 11 through a feeder channel 12. The wheel 2 is rotated clockwise around its axle moving in a direction from left to right in the figure.

The wheel 2 of the invention can be configured to comprise one or more of the dispenser/s 3 and/or one/or more of the container/s 11.

The solid and/or liquid matter held by the container/s 11 can be released from the container/s 11 and transported to the dispenser/s 3 in a controllable way. For instance, the release can be achieved by a mechanically and/or electronically controlled activation. This activation can be manually controlled by the user of the positioning device 1 or can be automated. The release can also be fully and/or partially activated by gravitational force and/or centrifugal force when said wheel 2 rotates.

In one embodiment of the invention said solid and/or liquid matter is released from each respective container/s 11 and subsequently is transported into the one or more dispenser/s 3 enabling release of said matter out from the wheel 2 into/onto said surface 18.

In one embodiment of the invention the container/s 11 are connected to the at least one dispenser 3 through one or more feeder channels 12.

In one embodiment of the invention said release is a controllable release of a unit of said solid and/or liquid matter into said one or more feeder channels 12 enabled by a mechanically and/or electronically controlled valve 19 positioned between each container 11 and connected dispenser/s 3. This controllable release can allow for the release of a unit of said solid and/or liquid matter multiple times or allow for the release of multiple units (such as 2, 3, 4, 5, 6, 7, 8, 9, 10 or more) of said solid and/or liquid matter, into said holes 8 of said surface 18.

The term unit herein can for example be one seed, one plant and/or one pellet of a solid matter of the invention or one drop or one volume of a liquid matter of the invention.

In one embodiment of the invention said valve 19, positioned between each container 11 and connected dispenser/s 3, can be controlled by gravitational force and/or centrifugal force when said wheel 2 rotates such that the valve is in an open position when said gravitational and/or centrifugal force exceeds an opposite force keeping the valve in a closed position.

In one embodiment of the invention the valve/s 19 as described herein, positioned between each container 11 and connected dispenser/s 3 can be positioned at the outlet of the container/s.

In one embodiment of the invention the valve/s 19 as described herein, positioned between each container 11 and connected dispenser/s 3, can be positioned at the connection point between the container 11 and said feeder channel/s 12.

In one embodiment of the invention the valve/s 19 as described herein, positioned between each container 11 and connected dispenser/s 3 can be positioned anywhere in said feeder channel/s 12.

In another embodiment of the invention the valve/s 19 as described herein, positioned between each container 11 and connected dispenser/s 3 can be positioned at the connection point between the feeder channel/s 12 and the dispenser/s 3.

In one embodiment of the invention the wheel 2 comprises a plurality of dispensers 3, wherein each dispenser 3 is connected to a respective container 11.

In one embodiment of the invention the container/s 11 are positioned inside the wheel 2 and the dispenser/s 3 are positioned on the wheel protruding out from said wheel, as depicted in figure 2.

In one embodiment of the invention the wheel comprises a plurality of containers 11, said containers are either configured for holding a solid or liquid matter.

In another embodiment of the invention the wheel comprises a plurality of containers 11, said containers are configured for holding different solid or liquid matter.

In one embodiment of the invention the container/s 11 are positioned outside and/or above the wheel 2, either attached by suitable means to the side of the wheel or said rod/beam/axle 7, said feeder channel 12 connecting the outside container/s 11 to the dispenser/s 3. The container/s 11 outside the wheel can easily be refilled with said solid and/or liquid matter when said device 1 is in operation, thus enabling continuous operation without having to stop and refill container/s which is suitable when covering larger surfaces 18.

The dispenser/s 3 can be formed and structured differently for the purpose to make holes 8 in the surface and to achieve a controlled release of said solid and/or liquid material into said surface.

As depicted in figure 2b in one embodiment of the invention said at least one dispenser 3 has a back wall 15 with two adjoining sides 16 and an opening 17 opposite the back wall 15, creating a bucket, said bucket being connected to the outer rim 20 of the wheel in an orientation such that when the wheel is rotated forward, also depicted as clockwise rotation in Figure 2a, on said surface 18, the back wall 15 and the two adjoining sides 16 of the bucket come into contact with the surface first creating a hole 8 in said surface 18, before said continuous forward rotation subsequently exposes the bucket opening to the surface 18 allowing said solid and/or liquid matter, now positioned in the bucket, to exit from the bucket opening 17 into the hole 8 in the surface 18, created by the same bucket.

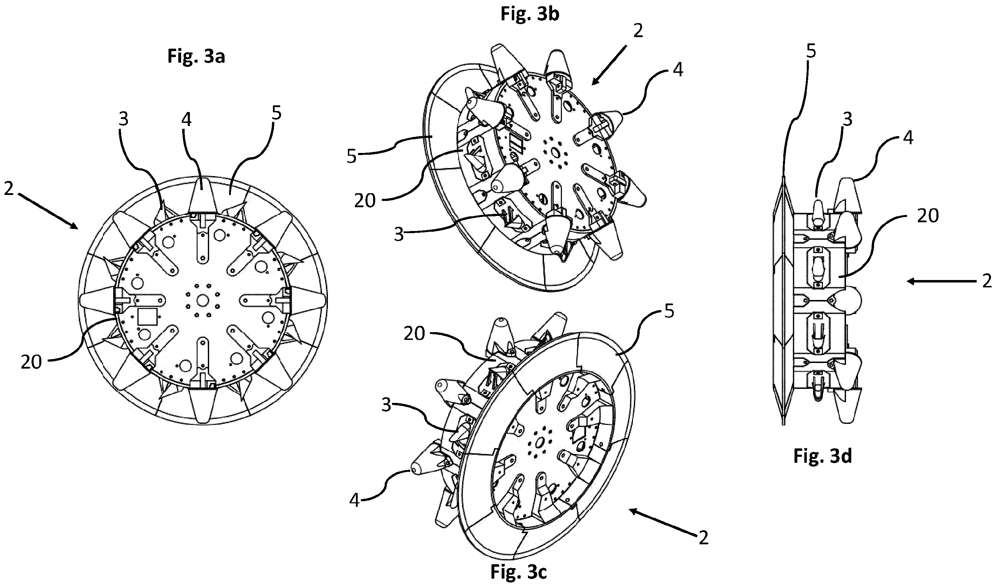

Figure 3 a-d presents one embodiment of the wheel 2 comprising positioning element/s exemplified by one row of positioning protrusions 4 distributed around the circumference of the outer rim 20 of the wheel on one side of the wheel 2. On the opposite side of the wheel a positioning element exemplified by a disc 5 is attached and in between the row of positioning protrusions 4 and the disc 5 dispenser/s 3 are evenly distributed around the circumference of the outside of the wheel in one straight row parallel to said row of positioning protrusions 4 and said disc 5. In figure 3a wheel is shown from the side, in figure 3b the wheel is shown with the inside of the disc 5 in a perspective view, in figure 3c the wheel is shown in a perspective view in an angle from above and in figure 3d the wheel is shown from the front. Figure 3 a-d show how said positioning protrusions 4 and disc 5 are laterally displaced in relation to said dispenser/s 3.

The guidance disc/s 5 of the invention serves the purpose of positioning the wheel 2 and laterally stabilizing the wheel 2 in relation to the direction of movement, (parallel to the axis of rotation of the wheel 2), when said wheel 2 rotates over a surface 18. The guidance disc/s 5 can be attached to one side of the wheel 2 as an entity or on both sides of the wheel 2 as two entities when said device 1 comprises two discs. The disc/s as mentioned herein can be continuously distributed around the circumference of the wheel. Due to the weight of the positioning device 1 the disc/s 5 will penetrate the surface and create a track/s 10 in the surface thus minimizing shifts in positioning of the positioning device 1 laterally. The track/s 10 formed by the disc/s 5 can also be used in subsequent runs to ensure the positioning of the positioning device 1 and so contribute to achieving higher precision when planting, sowing, culturing, watering and nurturing using the device 1.

The guidance disc/s 5 of the of the invention positions and stabilizes the wheel 2 laterally, parallel to the axis of rotation of the wheel 2, in relation to the direction of the movement. To further stabilize the wheel laterally a disc/s 5 can also be positioned behind the wheel 2, interconnected by a rod, beam or axle to the wheel 2. The disc/s 5 is configured to rotate around its own axis such that it rotates independent from the wheel 2 when the positioning device 1 is moving over the surface 18. The positioning device 1 of the invention can have any set up of disc/s 5 attached to the wheel 2 and/or interconnected with a rod, beam or axle behind the wheel 2, with or without positioning protrusions 4 distributed circumferentially on the outer rim 20 of said wheel 2.

The positioning device 1 of the invention can comprise a wheel 2 either comprising positioning element/s exemplified by one single row of distributed positioning protrusions 4 or comprising positioning element/s exemplified by two rows of distributed positioning protrusions 4 or comprising positioning element/s exemplified by one row of distributed positioning protrusions 4 and a disc 5 or comprising positioning element/s exemplified by one disc 5 (figure 1b), or comprising positioning element/s exemplified by two or more discs 5 (figure 1c), according to various embodiments. Said rows of positioning protrusions 4 and/or disc/s 5 are in such cases positioned parallel to each other on said wheel 2. According to the embodiment where the positioning element/s comprises only a disc 5, the wheel 2 does not comprise any row of positioning protrusions. Any of the herein described embodiments of the positioning device comprises at least one dispenser 3. The positioning protrusion/s 4 and disc/s 5 are laterally displaced in relation to said dispenser/s 3. This provides for improved positioning by stabilizing the device in a lateral and longitudinal direction in relation to the direction of movement. With lateral in relation to the direction of movement is meant parallel to the axis of rotation of the wheel 2 and with longitudinal in relation to the direction of movement is meant in the same direction as the wheel 2 moves.

In one embodiment of the invention the positioning protrusions 4 are distributed around the circumference of the wheel 2 in one straight row on only one side of the wheel 2.

In one embodiment of the invention the positioning device 1 comprises a guidance disc 5, said disc being positioned on the wheel 2, positioning and laterally stabilizing the wheel.

In one embodiment of the invention said guidance disc 5 is positioned on the opposite side of the wheel 2 from the side with the straight row of positioning protrusions 4 when said wheel comprises positioning protrusions on one side of the wheel.

**In** one embodiment of the invention the outside of the wheel 2 comprises one or more dispenser/s 3 and a disc 5, said dispenser/s 3 are evenly distributed around the circumference of the outside of the wheel 2 in one straight row parallel to said disc 5 (figure 1b).

**In** another embodiment of the invention the outside of the wheel 2 comprises one or more dispenser/s 3 and two guidance discs 5, said dispenser/s 3 are evenly distributed around the circumference of the outside of the rim 20 of the wheel 2 in one straight row parallel to said discs 5, said discs being positioned on each side of the wheel 2, positioning and laterally stabilizing the wheel 2 (figure 1c).

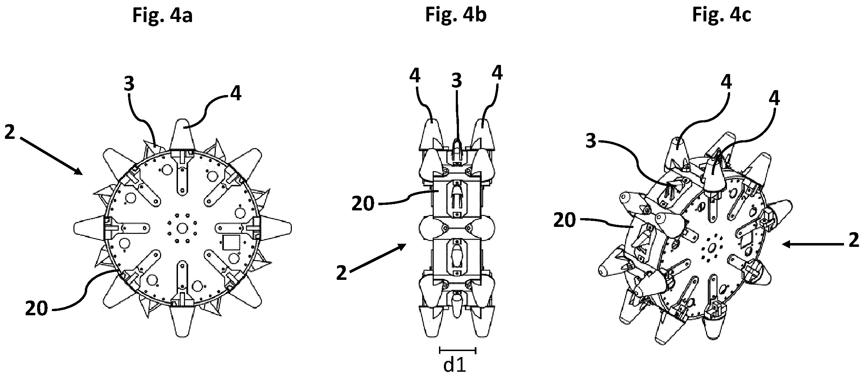

Figure 4 a-c presents one embodiment of the wheel 2 comprising dispensers 3, evenly distributed circumferentially around the outer rim 20 of the wheel 2, and double parallel rows of positioning protrusions 4, said rows being aligned circumferentially such that each positioning protrusion 4 form pairs laterally with a protrusion from the other row, separated with a distance d1. Figure 4a, showing the wheel form the side, show the dispensers 3 position between the pairs of positioning protrusion 4 longitudinally. Figure 4b, showing the wheel 2 from the back, shows the dispensers 3 centered laterally on the wheel 2. Figure 4c shows a perspective view of the wheel from an angle from above.

Depending on the surface, the area of the surface and if the device 1 is used for planting, sowing, culturing, watering and/or nurturing, different setups of the wheel 2 is warranted. Thus, the positioning device 1 of the invention can comprise a wheel 2 comprising positioning element/s exemplified by one single row of positioning protrusion/s 4 comprising one row of positioning protrusion/s 4 and a disc 5, comprising one or more disc/s 5 or comprising double rows, i.e. two rows, of positioning protrusion/s 4. All wheels in these examples comprise at least one dispenser 3.

**In** one embodiment of the invention the wheel 2 comprises a plurality of positioning protrusions 4 distributed around the circumference of the wheel 2.

In one embodiment of the invention the wheel 2 comprises a plurality of positioning protrusions 4 evenly distributed around the circumference of the wheel 2.

In one embodiment of the invention the positioning protrusions 4 are distributed around the circumference of the wheel 2 in one straight row on only one side of the wheel 2.

In one embodiment of the invention the positioning protrusions 4 are evenly distributed around the circumference of the wheel 2 in one straight row on only one side of the wheel 2.

In another embodiment of the invention the positioning protrusions 4 are distributed around the circumference of the wheel 2 in two parallel rows, on opposite sides of the wheel 2, each row comprising at least two positioning protrusions 4.

In another embodiment of the invention the positioning protrusions 4 are evenly distributed around the circumference of the wheel 2 in two parallel rows, on opposite sides of the wheel 2, each row comprising at least two positioning protrusions 4.

In yet another embodiment of the invention the positioning protrusions 4 in the two parallel rows are positioned in pairs, each positioning protrusion on the opposite side of the wheel 2, such that when said positioning protrusions 4 come in contact with said surface 18, two depressions beside each other, separated with a distance d1, is created.

The distance d1 is related to the measurements of the wheel and specifically to the width of the wheel. Therefore, the distance d1 varies with the width of the wheel. The distance d1 can be anywhere between 0.05 - 1 meter. For instance, in one embodiment of the invention the width of the wheel and the positioning of the positioning protrusions give a distance d1 of 0.05 meters. In another embodiment the distance d1 is 0.1 meter. In another embodiment the distance d1 is 0.2 meter. In another embodiment the distance d1 is 0.3 meter. In another embodiment the distance d1 is 0.4 meter. In another embodiment the distance d1 is 0.5 meter. In another embodiment the distance d1 is 0.6 meter. In another embodiment the distance d1 is 0.7 meter. In another embodiment the distance d1 is 0.8 meter. In another embodiment the distance d1 is 0.9 meter. In another embodiment the distance d1 is 1 meter.

The size of the wheel can be adapted to the area of the surface the device 1 is used on. For a larger area a larger device 1 is more suitable enabling covering a larger area more efficiently. Therefore, the wheel 2 can have a radius of anywhere from 0.3 - 1.5 meter and a width of 0.1 - 2 meters.

In one embodiment the radius of the wheel is 0.3 meter. In another embodiment radius of the wheel is 0.4 meter. In another embodiment the radius of the wheel is 0.5 meter. In another embodiment the radius of the wheel is 0.6 meter. In another embodiment the radius of the wheel is 0.7 meter. In another embodiment the radius of the wheel is 0.8 meter. In another embodiment the radius of the wheel is 0.9 meter. In another embodiment the radius of the wheel is 1 meter. In another embodiment the radius of the wheel is 1.1 meter. In another embodiment the radius of the wheel is 1.2 meter. In another embodiment the radius of the wheel is 1.3 meter. In another embodiment the radius of the wheel is 1.4 meter. In another embodiment the radius of the wheel is 1.5 meter.

In one embodiment the width of the wheel is 0.1 meter. In another embodiment the width of the wheel is 0.2 meter. In another embodiment the width of the wheel is 0.3 meter. In another embodiment the width of the wheel is 0.4 meter. In another embodiment the width of the wheel is 0.5 meter. In another embodiment the width of the wheel is 0.6 meter. In another embodiment the width of the wheel is 0.7 meter. In another embodiment the width of the wheel is 0.8 meter. In another embodiment the width of the wheel is 0.9 meter. In another embodiment the width of the wheel is 1 meter. In another embodiment the width of the wheel is 1.1 meter. In another embodiment the width of the wheel is 1.2 meter. In another embodiment the width of the wheel is 1.3 meter. In another embodiment the width of the wheel is 1.4 meter. In another embodiment the width of the wheel is 1.5 meter. In another embodiment the width of the wheel is 1.6 meter. In another embodiment the width of the wheel is 1.7 meter. In another embodiment the width of the wheel is 1.8 meter. In another embodiment the width of the wheel is 1.9 meter. In another embodiment the width of the wheel is 2.0 meter.

In another embodiment of the invention the dispenser/s 3 protrudes out from the wheel 2, distributed evenly around the circumference of the wheel 2 in one row parallel to said row of positioning protrusions 4, or parallel rows of positioning protrusions 4, parallel to said row of positioning protrusions 4 and said disc 5 or parallel to said discs 5.

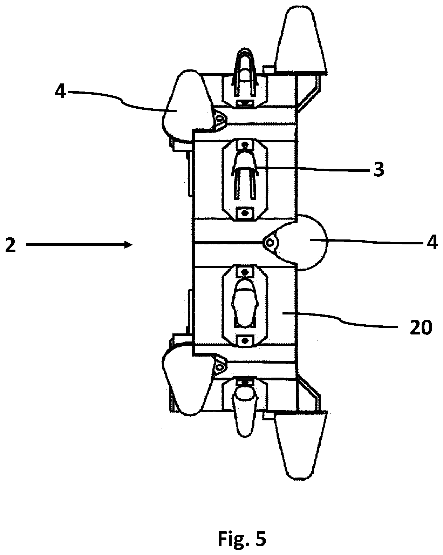

In one embodiment of the invention the wheel 2 comprises two parallel rows of positioning protrusions 4 with said rows overlapping. Figure 5 presents one embodiment of the wheel 2, seen from the back, comprising dispenser/s 3 and two parallel rows of positioning protrusions 4, the positioning protrusions 4 in the two rows overlapping circumferentially around the outer rim 20 of the wheel 2.

In one embodiment of the invention the positioning protrusions 4 are distributed around the circumference of the wheel 2 in two overlapping parallel rows.

In one embodiment of the invention the positioning protrusions 4 are evenly distributed around the circumference of the wheel 2 in two overlapping parallel rows.

The positioning protrusion/s 4 of the invention can have any shape and/or form suitable for making depressions 9 in said surface 18. Depending on the physical characteristics of the surface, e.g. density, porosity, stability, compaction, water content etc., certain shapes and/or forms of the positioning protrusions 4 will give better depressions 9 in said surface. With "better depressions" herein is meant that the depressions made are distinct and durable, staying intact, such as to enable for further passages with the same setup of positioning protrusions 4 and dispenser/s 3 on said wheel 2. Exemplary shape/s and/or form/s of the protrusions 4 are, but not limited to, conical, trapezoidal, triangular, rectangular, oval shape.

As mentioned above in one embodiment of the invention the dispenser/s 3 are interchangeably replaceable with a foot/feet 14, for making holes 8 in said surface 18, before changing said feet (14) to dispenser/s (3).

Figure 6 presents one embodiment of the wheel 2 of the invention, said wheel comprising feet 14 distributed circumferentially on the outer rim 20 of the wheel 2, in between and parallel to two rows of positioning protrusions 4. As mentioned above the feet 14 are used when robust and deep holes 8 are needed in the surface 18 before planting, sowing, culturing, watering and nurturing. By first passaging over an area of a surface with the positioning device 1 comprising the wheel 2 comprising feet 14, robust and deep holes 8 can be prepared in said surface 18, before changing said feet 14 to dispenser/s 3 and passaging over the same area with said positioning device 1 allowing the release of solid or liquid matter into said pre-made holes 8.

Said foot/feet 14 can have any suitable shape. Exemplary shape/s and/or form/s of the foot/feet 14 are, but not limited to, conical, trapezoidal, triangular, rectangular, oval shape.

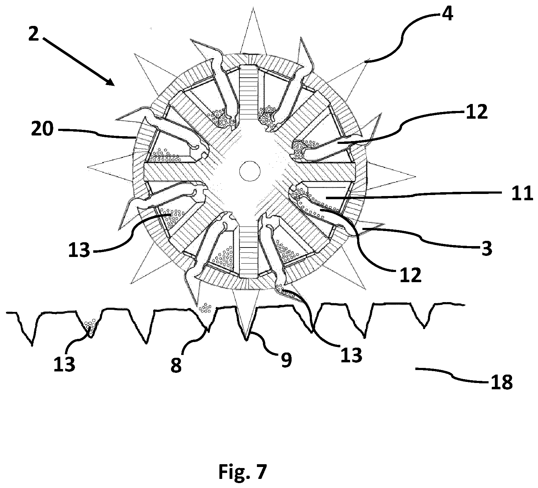

Figure 7 presents one embodiment of the wheel 2 of the invention, said wheel comprising dispenser/s 3, each connected to a container 11 by a channel 12. In said container/s 11 and in one channel 12 solid matter 13 is depicted as small circles. Positioning protrusions 4 are shown whereas one positioning protrusion is fitted into a depression 9 that was made in a previous passage with said positioning protrusions 4. Fig. 7 also presents solid matter 13 positioned in a dispenser 3 and exiting a dispenser 3 falling into a hole 8 that was made in a previous passage with said foot /feet 14. Figure 7 also depicts newly released solid matter 13 positioned in a premade hole 8. In figure 7 the wheel moves in a direction from left to right such that the back wall of the bucket of the dispenser/s 3 first touches the surface 18.

As stated above the holes 8 made in the surface 18 by the positioning device 1 can either be made using said foot/feet 14 or by using said bucket of the dispenser/s 3.

In one embodiment of the invention the wheel 2 comprises dispenser/s 3 wherein said bucket of the dispenser 3 creates a hole 8 in the surface in which solid and/or liquid matter, held in the bucket, is subsequently released into.

The solid and /or liquid matter released by the positioning device 1 into the holes 8 of the surface can be any solid and/or liquid matter used when planting, sowing, culturing, watering and nurturing.

In one embodiment of the invention said solid matter comprising solids of seeds, seedlings, grains, plants, flowers, pellets, fertilizers, insecticides, pesticides, or nutrients.

In one embodiment of the invention said liquid matter comprise liquids of water, fertilizers, nutrients, insecticides, and/or pesticides.

The positioning device 1 of the invention can be used for releasing agricultural matter in different types of surfaces with a high positioning precision. By using the positioning device in agriculture, resources such as, but not limited to, the solid and/or liquid matter mentioned herein, can be used more efficiently, with less spill, thus enabling a more efficient, resource saving culturing giving a higher yield in agricultural output. The high precision of the device of the invention is due to the positioning elements exemplified herein with positioning protrusions 4 and/or the disk 5 positioning and stabilizing the device, laterally and longitudinally, as the device 1 is moved over the surface 18, creating depressions 9 and/or a track/s 10 which can be used to guide the device in multiple passages over the same area of the surface.

In one embodiment of the invention the positioning device 1 comprises a set of wheels 2, said wheels having any combination of features as described herein. By having a positioning device 1 comprising a set of wheels 2, larger areas of said surface 18 can be covered with the positioning device 1 and be more efficiently worked in a shorter period of time. With a set herein is meant two or more.

In one embodiment of the invention the positioning device 1 comprises two or more wheels 2, said wheels having any combination of features as described herein, said wheels 2 being positioned beside the other, interconnected by suitable means, such as by a shaft or axle 7, such that they line up in a straight row, making the device broader for every wheel 2 added to the positioning device 1. In one example of the invention 2, 3, 4, 5, 6, 7, 8, 9, or 10 wheels are interconnected in a straight row as described here. According to one embodiment, at least one driving wheel or mechanism of a driver may be arranged parallel to the wheel interconnected to the axle 7 and arranged to drive the axle 7, and thus the positioning device 1. A driving wheel of a driver may further be arranged on the other side of the wheel 2 or set of wheels 2 and interconnected to the axle 7 and arranged to drive the axle 7, and thus the positioning device 1. According to one embodiment, further driving wheels of a driver may be arranged in between the wheels 2. In general a benefit of arranging the driver and potentially its driving wheels outside of the wheels 2 is a more efficient use of the ground as the usable area increases.

In another embodiment of the invention the positioning device 1 comprises two or more wheels 2, said wheels having any combination of features as described herein, wherein each wheel 2 is positioned before and/or after the other wheel/s in a line, interconnected by suitable means, such as by one or more shaft/s, such that they line up in a straight row, making the device longer for every extra wheel 2 added to the positioning device 1. The two or more wheels 2 of the device can have the same setup of positioning element/s 4,5 on respective wheel and said wheels can be separated with a distance such that the positioning element/s 4,5 of each interconnected wheel following the first wheel in the row, line up with the depressions 9 and/or track/s 10 created by the positioning element/s 4,5 in said surface 18 by the first wheel in the row. In one example of the invention 2, 3, 4, 5, 6, 7, 8, 9, or 10 wheels are interconnected in a straight row as described here above.

The wheels in a positioning device 1 comprising two or more wheels can be prepared with different solid and/or liquid matter as described herein such that the wheels 2 of the positioning device 1 enables any of planting, seeding, sowing, watering, weeding, fertilizing, nurturing and/or distributing insecticides and/or pesticides into/onto said surface 18. Thus, the positioning device 1 as described herein can be set up with two or more wheels having different functions (planting, seeding, sowing, watering, weeding, fertilizing, nurturing and/or distributing insecticides and/or pesticides) to optimize sowing, culturing, and nurturing of plants and crops.

One embodiment of the invention comprises a method for positioning a positioning device 1 of the invention. The method comprises rotating the wheel 2 over an area of said surface in a first passage such that the positioning elements 4,5, said positioning protrusions 4, said disc/s 5, or said positioning protrusions 4 and disc/s 5 creates depressions 9 and/or track/s 10 in said surface 18, said dispenser/s 3 releasing said solid and/or liquid matter into holes 8 in said surface 18 when in contact with said surface; until said first passage is completed;
positioning said wheel 2, with said positioning elements 4,5, said positioning protrusions 4, said disc/s 5, or said positioning protrusions 4 and disc/s 5, such that they align laterally and longitudinally with the depressions 9 and/or track/s 10, created by said positioning elements 4,5, said positioning protrusions 4, said disc/s 5, or said positioning protrusions 4 and disc/s 5 in the same area of said surface 18 in said first passage;
rotating said wheel 2 over said surface 18 of the same area in a second passage, said positioning elements 4,5, said positioning protrusions 4, said disc/s 5, or said positioning protrusions 4 and disc/s 5 following laterally and/or longitudinally the pattern of the depressions 9 and/or track/s 10, in said surface 18 made in the first passage of said area, said dispenser/s 3 releasing the same or a different solid and/or liquid matter into holes 8 in said surface 18.

In another embodiment of the invention the method comprises an extra passage before the first passage said extra passage comprising rotating the wheel 2, now comprising a foot/feet 14, over the area of said surface 18 such that said positioning elements 4,5, said positioning protrusions 4, said disc/s 5, or said positioning protrusions 4 and disc/s 5 creates depressions 9 and/or track/s 10 in said surface 18, said foot/feet 14 creating holes 8 in said surface 18; changing said interchangeably replaceable foot/feet 14 to said dispenser/s 3; and continuing with the first passage of the method.

In yet another embodiment of the invention the method comprises rotating said wheel 2 over said surface 18 of the same area in one or more passages, said positioning elements 4,5, said positioning protrusions 4, said disc/s 5, or said positioning protrusions 4 and disc/s 5 aligning laterally and/or longitudinally with the pattern of the depressions 9 and/or track/s 10 made in the previous passages, said dispenser/s 3 releasing a solid and/or liquid matter into the holes 8 in said surface 18.

The positioning device 1 of the invention can be connected to an external driver through one or more rod/beam/axle 7 interconnected to the receiving portion 6 of the wheel 2. The external driver provides a force for moving the positioning device 1 over said surface 18. This force can be provided from the external driver in any suitable way, such as by push and /or pull force exerted on the positioning device 1 through the rod/beam/axle 7 and/or by transfer of a torque from the external driver to the positioning device through the rod/beam/axle 7.

In one embodiment of the invention said driver is a human, an animal, or a separate engine and/or vehicle.

In another embodiment of the method of the invention the wheel 2 of the positioning device 1 is rotated by the applied torque of an external driver, such as a human, animal, or a separate engine and/or vehicle.

The positioning device 1 of the invention can be used in a variety of agricultural applications such as, but not limited to, planting, sowing, culturing, watering, and nurturing.

One embodiment of the invention comprises a method for cultivating a seed, seedling, root, cutting, crop, flower, or plant, by using the positioning device and/or the method of the invention.

One embodiment of the invention comprises the use of the positioning device for distributing one or more of a solid and/or liquid matter into/onto a surface.

In another embodiment of the invention said use is for planting, seeding, sowing, watering, weeding, fertilizing, nurturing and/or distributing insecticides and/or pesticides into/onto said surface.

The positioning device 1 of the invention can be used on any suitable surface in agriculture. In one embodiment of the invention a suitable surface is exemplified with a soil. Said soil can comprise sand, clay, silt, chalk, peat and/or loam. Said soil can also comprise any mixture of said sand, clay, silt, chalk, peat and/or loam.

The positioning device 1 of the invention can be made in any suitable material, such as, but not limited to, metal/s, plastic/s, composite/s and/or mixtures thereof. The different parts of the device 1, such as the wheel 2, the container/s 11, the dispenser/s 3, positioning protrusions 4, receiving portion/s 6, the rod/beam/s 7, the channel/s 12 and/or the foot/feet 14 as described herein can all be of the same suitable material or different suitable materials.

The positioning device 1 of the invention can be combined with other suitable aids for positioning of devices used for releasing agricultural matter. For instance, the device 1 of the invention could be combined with a camera system giving extra precision in positioning of the device 1 by providing visual identification/confirmation of depression/s 9, track/s 10 and/or hole/s 8 made in a previous passage. This could be extra helpful in conditions of low visibility due to weather and/or time of day.

## Claims

1. A positioning device (1) for agricultural use for releasing agricultural matter comprising; a wheel (2) with at least one container (11) for holding a solid and/or liquid matter; at least one dispenser/s (3), connected to the at least one container (11), configured for releasing said matter out from the wheel (2) into/onto a surface (18); one or more positioning element/s (4,5) distributed circumferentially on the outer rim (20) of the wheel (2) for positioning of the device (1) by creating depression/s and/or track/s (9,10) into said surface (18); a receiving portion (6) for interconnection of the positioning device (1) to an external driver; wherein said positioning element/s (4,5) and dispenser/s (3) are laterally displaced in relation to each other.

2. A positioning device (1) for agricultural use for releasing agricultural matter according to any of the previous claims wherein said at least one dispenser/s (3) is interchangeably replaceable with a foot/feet (14) for making holes (8) in said surface (18), before changing said feet (14) to dispenser/s (3).

3. The positioning device (1) according to any of the previous claims, wherein the wheel (2) comprises a plurality of containers (11), said containers are either configured for holding a solid or liquid matter.

4. The positioning device (1) according to any of the previous claims, the wheel (2) comprising a plurality of dispensers (3), wherein each dispenser (3) is connected to a respective container (11).

5. The positioning device (1) according to any of the previous claims, wherein said dispenser/s (3) has a back wall (15) with two adjoining sides (16) and an opening (17) opposite the back wall (15), creating a bucket, said bucket being connected to the outer rim (20) of the wheel (2) in an orientation such that when the wheel (2) is rotated forward, on said surface (18), the back wall (15) and the two adjoining sides (16) of the bucket come into contact with the surface (18) first creating a hole (8) in said surface, before said continuous forward rotation subsequently exposes the bucket opening (17) to the surface (18) allowing said solid and/or liquid matter, now positioned in the bucket, to exit from the bucket opening (17) into the hole (8) in the surface (18), created by the same bucket.

6. The positioning device (1) according to any of the previous claims, wherein said device comprises a wheel (2) with mechanically and/or electronically controlled valve (19) positioned between each container (11) and connected dispenser/s (3) enabling controlled release of said solid and/or liquid matter out from the wheel (2) into/onto said surface (18).

7. The positioning device (1) according to claim 1, wherein said positioning element/s comprises a plurality of positioning protrusions (4) distributed circumferentially on the outer rim (20) of the wheel (2) for positioning of the device (1) by creating depression/s (9) into said surface (18).

8. The positioning device (1) according to claim 1, wherein said positioning element/s comprises of one or more guidance disc/s (5), said disc/s being positioned on the wheel (2) for positioning of the device (1) by creating a track/s (10) in said surface (18).

9. The positioning device (1) according to claim 1, wherein said positioning element/s comprises a plurality of protrusions (4) distributed circumferentially on the outer rim (20) of the wheel (2) and one or more guidance disc/s (5), said protrusions (4) and disc/s (5) being positioned on the wheel (2) for positioning of the device (1) by creating depression/s (9) and a track/s (10) in said surface (18).

10. Method for positioning the positioning device (1) according to any of claims 1-9, said method comprising;
i. rotating the wheel (2) over an area of said surface (18) in a first passage such that the positioning elements (4,5), said positioning protrusions (4), said disc/s (5), or said positioning protrusions (4) and disc/s (5) creates depressions (9) and/or track/s (10), in said surface (18), said dispenser/s (3) releasing said solid and/or liquid matter into holes (8) in said surface (18); until said first passage is completed;
ii. positioning said wheel (2), with said positioning elements (4,5), said positioning protrusions (4), said disc/s (5), or said positioning protrusions (4) and disc/s (5), such that they align laterally and/or longitudinally with the depressions (9) and/or track/s (10), created by said positioning elements (4,5), said positioning protrusions (4), said disc/s (5), or said positioning protrusions (4) and disc/s (5) in the same area of said surface (18) in said first passage;
iii. rotating said wheel (2) over said surface (18) of the same area in a second passage, said positioning elements (4,5), said positioning protrusions (4), said disc/s (5), or said positioning protrusions (4) and disc/s (5) following laterally and/or longitudinally the pattern of the depressions (9) and/or track/s (10), in said surface (18) made in the first passage of said area, said dispenser/s (3) releasing the same or a different solid and/or liquid matter into holes (8) in said surface (18).

11. The method of claim 10 said method comprising; before executing step i) of the method,
- rotating the wheel (2), now comprising a foot/feet (14), over the area of said surface (18) such that said positioning elements (4,5), said positioning protrusions (4), said disc/s (5), or said positioning protrusions (4) and disc/s (5) creates depressions (9) and/or track/s (10) in said surface (18), said foot/feet (14) creating holes (8) in said surface (18);
- changing said interchangeably replaceable foot/feet (14) to said dispenser/s (3)
- continuing with step i) of the method.

12. A method for cultivating a seed, seedling, root, cutting, crop, flower, or plant, by using the positioning device according to any of claims 1-9 and/or the method of any of claims 10-11.

13. Use of the positioning device (1) according to any of the claims 1-9, for distributing one or more of a solid and/or liquid matter into/onto a surface (18).
